Europäisches Patentamt

European Patent Office

Office européen des brevets

(11) Veröffentlichungsnummer: **0 329 832 B1**

(12) **EUROPÄISCHE PATENTSCHRIFT**

(45) Veröffentlichungstag der Patentschrift: **02.12.92**

(21) Anmeldenummer: **88119072.2**

(22) Anmeldetag: **17.11.88**

Teilanmeldung 91116205.5 eingereicht am 17/11/88.

(51) Int. Cl.⁵: **B65G 21/02**

(54) **Rahmen für Bandfördervorrichtungen.**

(30) Priorität: **25.02.88 DE 3805918**

(43) Veröffentlichungstag der Anmeldung:
**30.08.89 Patentblatt 89/35**

(45) Bekanntmachung des Hinweises auf die
Patenterteilung:
**02.12.92 Patentblatt 92/49**

(84) Benannte Vertragsstaaten:
**AT BE CH DE ES FR GB GR IT LI LU NL SE**

(56) Entgegenhaltungen:
**EP-A- 0 036 958**
**DE-U- 8 704 461**

(73) Patentinhaber: **Geppert, Helmut**
**Niederfeld 12**
**W-5162 Niederzier-Krauthausen(DE)**

(72) Erfinder: **Geppert, Helmut**
**Niederfeld 12**
**W-5162 Niederzier-Krauthausen(DE)**

(74) Vertreter: **Liermann, Manfred**
**Schillingsstrasse 335**
**W-5160 Düren(DE)**

## Beschreibung

Die Erfindung betrifft einen Rahmen für Bandfördervorrichtungen mit im Abstand gegenüberliegenden, zueinander parallel verlaufenden T-nuten aufweisenden Längshol men, mit mindestens einer von einem Zwischenstück gebildeten Gleitebene und mit Lagerschilden für eine Umlenk- und eine Antriebswalze für das Förderband.

Einrichtungen der vorbeschriebenen Art sind beispielsweise bekannt geworden durch die DE-A 33 18 174. Die parallel verlaufenden Längsholme weisen bei diesem bekannten Rahmen ein C-förmiges Querschnittsprofil auf, dessen offene Seiten sich innen gegenüberliegend angeordnet sind. Rahmen dieser Art haben sich sehr bewährt. Sie weisen jedoch den Nachteil auf, daß in den Längsholmen verschiedene Lochungen vorgesehen sein müssen zur Anbringung von Ständern, Tragmitteln, Traversen und Einrichtungen zur Abstützung eines Gleitbleches. Sie sind damit immer noch relativ teuer in der Herstellung und es ist der Anbringungsort der anzuordnenden Teile an die Lochrasterung gebunden. Eine optimale Anpassung der Einrichtung auch an äußere Platzverhältnisse ist daher nicht oder nur mit zusätzlichen Hilfsmitteln möglich.

Eine weitere recht brauchbare Möglichkeit zur Bildung eines Rahmens für Bandfördervorrichtungen ist in dem DE-U 85 29 524 offenbart. Zur Bildung der Längsholme werden nach dieser Literaturstelle aus einem Halbzeug auf Länge abgeschnittene Stränge verwendet, die im wesentlichen einen quadratischen Querschnitt aufweisen und auf jeder Seite des Quadrates mittig eine in Längsrichtung verlaufende, durchgehende, hinterschnittene Nut aufweisen, so, daß im Querschnitt ein mit einer Längsbohrung versehener Kern stehenbleibt. Zwar ist nunmehr der jeweilige Längsholm als Halbzeug preisgünstig herstellbar und auch günstig auf Lager zu halten. Die Anordnung der Längsnuten erzwingt jedoch eine obere Abdeckung durch ein Gleitblech, das zudem mit gesonderten Befestigungsmitteln befestigt werden muß. Dieses Gleitblech weist an den Seiten hochstehende Ränder auf zur Seitenführung des Förderbandes. Diese Ränder bedürfen der zusätzlichen Bearbeitung, um scharfe Kanten, die eine Verletzungsgefahr bedeuten, zu vermeiden. Bei diesem Band sind die Lagerschilde für die Antriebswalze oder die Umlenkwalze außen längsverschiebbar an die Holme angesetzt. Die äußere Breite der hochgekanteten Seiten des Gleitbleches muß daher geringer sein als der innere Breitenabstand der sich jeweils gegenüberliegend angeordneten Lagerschilde, da diese in vertikaler Richtung nach oben über die Längsholme überstehen. Hierdurch aber ergibt sich bei einer Nachspannung des Förderbandes zwischen der seitlichen Innenfläche des Lagerschildes und der Seitenkante des Förderbandes ein unzulässiger Spalt. Wird zur Verkleinerung des Spaltes die Breite des Förderbandes so ausgelegt, daß sie die von dem Gleitblech gebildete Rinne vollständig ausfüllt, so ist ein evtl. seitliches Wandern des Förderbandes nicht mehr erkennbar, so daß auch eine entsprechende Korrektur der Lage der Umlenkrollen oder Antriebsrollen nicht möglich ist. Das Band wird daher während des Betriebes an einer Seite seitlich anlaufen und dort stark reiben. Dies erfordert eine höhere Antriebsenergie und zerstört auf Dauer das Band oder führt gar zu einem Überschlag des Bandes mit alsbaldiger Zerstörung.

Der Erfindung liegt damit die Aufgabe zugrunde, einen Rahmen für Bandfördervorrichtungen der eingangs beschriebenen Art vorzuschlagen, der einfach im Aufbau sowie kostengünstig in der Herstellung und Lagerbervorratung ist, ohne daß wichtige Vorteile bekannter Rahmen verlorengehen. Eine zerspanende Bearbeitung des Rahmens bei der Fertigung soll minimiert werden.

Gemaß Anspruch 1 wird diese Aufgabe dadurch gelöst, daß die T-Nuten einen vertikal zu einem die Gleitebene bildenden Gleitblech verlaufenden gemeinsamen, sich mindestens über die gesamte Breite der T-Nut erstreckenden Mittelsteg aufweisen und daß ein U-förmig abgewinkeltes Gleitblech zwischen die beiden Längsholme eingeschoben und mittels der Seitenschenkel zwischen den Längsholmen mit Hilfe der T-Nuten befestigt ist, so daß die äußere Fläche des Bodenschenkels in einer Ebene mit der äußeren Fläche einer Gurtwand liegt und so als Gleitblech dient. Ein solcher Querschnitt eines Längsholms ist sehr einfach und kostengünstig als Halbzeug herzustellen. Die Halbzeugstange muß nun lediglich auf die gewünschte Länge abgetrennt werden, so daß sofort zwei Längsholme zur Verfügung stehen, die nach dem Absägen fix und fertig sind für die Anordnung der Lagerschilde, der Ständer oder Standbeine, Verstelleinrichtungen für die Längsverstellung der Lagerschilde, für die Aufnahme und Befestigung von Gleitblechen oder Stützwalzen usw.. Mit Hilfe der beiden sich gegenüberliegenden Nuten kann alles, was an einem Förderband notwendig ist, angeordnet werden und zwar stufenlos in jeder beliebigen Lage in Längsrichtung. Die Gestaltung und Anordnung des Gleitbleches ist kostengünstig möglich, und es kann bei dieser Anordnung insbesondere verhindert werden, daß scharfe Ränder des Gleitblechs nach oben stehen. Außerdem wird durch diese Anordnung die besonders einfache Gestaltung der Längsholme ermöglicht.

Eine alternative Lösung der Erfindung (Anspruch 2) sieht vor, daß die T-Nuten einen vertikal zu einem die Gleitebene bildenden Gleitblech verlaufenden gemeinsamen, sich mindestens über die gesamte Breite der T-Nut erstreckenden Mittelsteg aufweisen und daß ein U-förmig abgewinkeltes Gleitblech auf die Gurtwand der Längsholme aufgelegt und diese überdeckend mit einem abgewinkelten Seitenschenkel je seitlich um den Längsholm herumgelegt und dort mit Hilfe der T-Nuten befestigt ist.

Hierdurch werden alle Vorteile der ersten Lösung erreicht und es werden zusätzlich die Längsholme weitgehend abgedeckt. Das Gleitblech kann hierbei auch von von außen mit Hilfe der T-Nuten anzubringenden Teilen geklemmt werden.

Nach einer Ausgestaltung der Erfindung ist vorgesehen, daß die Längsholme auf der Unterseite einen in Längsrichtung verlaufenden Flansch aufweisen, mit mindestens einer ebenfalls sich in Längsrichtung erstreckenden Nut, die zum gegenüberliegenden Längsholm hin offen ist. Hierdurch erhält jeder Längsholm eine höhere Biegesteifigkeit und es ist bei der Anwendung von Umlenkwalzen oder Antriebswalzen größeren Durchmessers auch noch problemlos möglich, weitere Bauteile auch mit Hilfe der Nut anzuordnen. Hierbei kann es vorteilhaft sein, daß diese Nut als T-Nut ausgebildet ist. Es wird dann besonders einfach möglich, eine oder mehrere Andrückwalzen im Bereich des in Längsrichtung verlaufenden Flansches vorzusehen. Auch bietet sich hierdurch eine günstige Möglichkeit zur Befestigung eines sogen. Mittelantriebs.

Es kann aber auch vorteilhaft sein, wenn die genannte Nut schlitzartig ausgebildet ist. Dies ist besonders dann vorteilhaft, wenn es nur erforderlich ist, ein einfaches Gleitblech oder Abdeckblech einzuschieben.

Eine günstige Ausgestaltung ergibt sich auch dann, wenn sowohl eine T-Nut als auch schlitzartig ausgebildete Nut im Flansch vorgesehen ist. In die schlitzartig ausgebildete Nut kann dann einfach ein Abdeckblech eingeschoben werden, während über die als T-Nut ausgebildete Nut ein Mittelantrieb und/oder ein oder mehrere Andrückwalzen befestigt werden können.

Eine ergänzende Ausgestaltung sieht vor, daß oberhalb der sich gegenüberliegenden T-Nuten und im seitlich äußeren Bereich jedes Längsholmes eine in Längsrichtung verlaufende, schlitzartige Nut vorgesehen ist. Hierdurch wird es möglich ein oberes Gleitblech einfach in diese schlitzartige Nut des jeweiligen Längsholms einzuschieben. Hierbei kann es vorteilhaft sein, daß die genannte Nut nach oben offen ist. Hierdurch nämlich wird es möglich, die Ränder des Gleitbleches nach unten umzuwinkeln und so das Gleitblech mit diesen Rändern in die nach oben offene Nut einzuschieben. Irgendeine Nachbearbeitung der an sich ja scharfen Ränder zur Vermeidung einer Verletzungsgefahr ist nicht mehr notwendig.

Besonders günstig kann es jedoch sein, wenn die Nut in Richtung auf den gegenüberliegenden Längsholm hin offen ist, wobei die untere Begrenzungswand der Nut von dermindestens etwa parallel zum Gleitblech verlaufenden Oberfläche des zugehörigen Längsholmes gebildet wird. Hierdurch nämlich kann sogar ein Abkanten der Ränder des Gleitbleches vermieden werden und es kann das Gleitblech als flaches Blech in die jeweilige Nut eingeschoben werden. Die seitlich versetzte Anordnung dieser Nut sorgt dabei gleichzeitig dafür, daß das Gleitblech jeweils im Bereich des Längsholmes eine genügend breite Auflage vorfindet.

Ergänzend ist dann nach der Erfindung vorgeschlagen, daß ein die Nut begrenzender Außensteg eine geringere Dicke aufweist als ein bei der Bandfördervorrichtung zu verwendendes Förderband. Hierdurch wird ein seitliches Auflaufen des Fördergutes bei einem Überstand vermieden. Natürlich ist es aber auch umgekehrt möglich, daß der die Nut begrenzende Außensteg eine erheblich größere Dicke aufweist als das bei der Bandfördervorrichtung verwendete Förderband, um hierdurch eine Seitenführung für das Fördergut zu schaffen.

Besonders vorteilhaft ist es, wenn die Längsholme oberhalb der sich gegenüberliegenden T-Nuten eine Gurtwand aufweisen, die über ihre gesamte Länge eine rechteckige Ausnehmung für den Einschub eines Spaltblechs aufweist. Das jeweilige Spaltblech kann hierbei an einem zugeordneten Lagerschild befestigt sein, so daß bei einer Längsverschie bung des Lagerschildes das Spaltblech sich automatisch mit verschiebt, wodurch stets und ohne besondere zusätzliche Maßnahmen das Entstehen eines unzulässigen Spaltes verhindert wird.

Es ist dann noch weiter nach der Erfindung vorgeschlagen, daß ein Gleitblech in die oberhalb der sich gegebnüberliegenden T-Nuten vorgesehene schlitzartigen Nuten eingeschoben ist. Es bedarf in der Tat nur des einfachen Einschiebens des Gleitbleches. Um eine Längsverschiebung des Gleitbleches während des Betriebes zu vermeiden, ist es lediglich erforderlich, an den Enden das Gleitblech etwas überstehen zu lassen und am Ende mit einer kleinen Einbeulung vor den beiden Enden des Längsholmes zu versehen. Es kann hier auch leicht abgewinkelt werden.

Eine andere Ausgestaltung der Erfindung sieht jedoch vor, daß ein Gleitblech auf die Gurtwand der Längsholme aufgelegt und diese überdeckend mit einem abgewinkelten Seitenschenkel je seitlich um den Längsholm herumgelegt ist. Auf diese Art und Weise können die Längsholme vollständig oder teilweise verkleidet werden. Das Gleitblech kann hierbei von außen anzubringenden Teilen geklemmt werden.

Wiederum eine Ausgestaltung der Erfindung sieht vor, daß die beiden Längsholme über mindestens eine zwischen ihnen angeordnete Quertraverse miteinander verbunden sind, die im wesentlichen aus zwei Befestigungsflanschen und einer dazwischen angeordneten Stütztraverse besteht, zur unterseiten Abstützung des Gleitbleches. Auf diese Art und Weise sorgen die Traversen einerseits für eine starre Befestigung der Längsholme und unterstützen andererseits das Gleitblech, so daß eine Verwerfung des Gleitbleches auch bei größeren Abmessungen sicher verhindert werden kann. Hierbei ist es besonders vorteilhaft, wenn die Befestigungsflansche so tief angesetzt sind, daß zwischen Oberkante des Befestigungsflansches und Oberkante der Stütztraverse ein Abstand besteht, der im Angrenzungsbereich der beiden Bauteile eine Verformungslücke für das Gleitblech gebildet. Die Längsholme werden über die Quertraversen in einem von den Quertraversen bestimmten Abstand starr miteinander verbunden. Zwischen den Befestigungsflanschen der Quertraverse und der Innenseite der Längsholme wird nun das U-förmig abgewinkelte Gleitblech mittels der Seitenchenkel befestigt. Hierzu müßte exakte und toleranzfreie Maßübereinstimmung bestehen. Dies ist aber fertigungstechnisch nicht möglich. Um dennoch langwierige Anpassungsarbeiten zu vermeiden, wird die soeben beschriebene Ausgestaltung vorgeschlagen. Hierdurch kann der Abstand der Seiten schenke des U-förmig abgewinkelten Gleitbleches etwas geringer als das Sollmaß gehalten werden und kann in dieser Maßangabe um eine einhaltbare Toleranz größer oder kleiner werden. Wenn es größer wird, kann es genau passen und wenn es kleiner wird, kann es sich in diese Verformungslücke hineinziehen und damit der größeren Breite anpassen. Irgendwelche Anpaßarbeiten können damit vollständig entfallen.

Eine andere Ausgestaltung der Erfindung sieht vor, daß in die in Längsrichtung verlaufende Nut des sich ebenfalls in Längsrichtung erstreckenden Flansches ein unteres Gleitblech eingeschoben ist. Dieses untere Gleitblech schließt den Rahmen von unten her ab und kann hierbei sowohl eine Aufgabe als Gleitblech als auch für sich allein oder zusätzlich eine Aufgabe als Abdeckung übernehmen. Insbesondere für den Fall der Abdeckung ist das Förderband so geführt, daß die Oberfläche, die dem Fördergut zugewendet wird, am unteren Gleitblech zur Anlage kommt. In diesem Fall kann das als Abdeckung dienende Gleitblech gleichzeitig auch seine Aufgabe als Gleitblech erfüllen.

Eine andere Ausgestaltung sieht vor, daß in der in Längsrichtung verlaufenden T-Nut des sich ebenfalls in Längsrichtung erstreckenden Flansches mindestens eine Andrückwalze mit Hilfe einer Walzenhalterung eingeschoben und befestigt ist. Die Andrückwalze kann hier besonders einfach befestigt werden und es ist auch ein einfacher und stufenloser Positionswechsel der Andrückwalze in Längsrichtung möglich. Darüber hinaus können durchaus in dieselbe T-Nut auch mehrere Andrückwalzen eingeschoben und dort befestigt werden. Gleiches gilt für den Aufbau und die Anordnung eines Mittelantriebs.

Es ist weiter vorteilhaft, wenn jedes längsverstellbare Lagerschild ein Spaltblech aufweist in einer solchen Anordnung, daß es in die rechteckige Ausnehmung in der Gurtwand eingeschoben und mit einer Bewegung der Lagerschilde mit bewegt wird. Hierdurch ist stets eine sichere Spaltabdeckung gewährleistet, unabhängig von der Position der Lagerschilde. Hierbei kann es vorteilhaft sein, wenn das Spaltblech mindestens über einen Teil seiner Länge gewellt ist. Über diese Wellung kann das Spaltblech die rechteckige Ausnehmung in der Höhe vollständig ausfüllen, so daß ein Klappern des Spaltbleches vermieden wird.

Eine andere Ausgestaltung wiederum sieht vor, daß mindestens die Lagerschilde für eine Walze im wesentlichen aus einem Kopfstück mit an sich bekannter Walzenspaltabdeckung und sich anschließender Steckfüße zum Einschub in die T-Nuten des zugeordneten Längsholmes bestehen. Kopfstücke mit Walzenspaltabdeckungen im unmittelbaren Bereich der Walze sind an sich bekannt. Diese Kopfstücke sollen nunmehr mit Steckfüßen versehen sein, so daß diese Kopfstücke nicht mehr wie üblich, über Seitenschilde an der Seite der Längsholme verschiebbar befestigt werden, sondern in die Längsholme bzw. in deren T-Nuten eingeschoben werden, so daß die Seitenflächen der Längsholme völlig frei bleiben können.

Es ist weiter besonders vorteilhaft, wenn in dem sich in Längsrichtung erstreckenden Flansch mindestens eine in Längsrichtung durchgehend verlaufende Öffnung vorgesehen ist. Je nach Gestaltung des Flansches kann diese Öffnung einerseits der Materialeinsparung und Spannungsverteilung dienen und andererseits kann in diese Öffnung ein Einsatz eingesetzt werden, z.B. mit einem Innengewinde, mit dessen Hilfe eine Längsverstellung der Kopfstücke der Walzen möglich ist.

Hinsichtlich der Befestigung des U-förmig abgewinkelten Gleitbleches ist nach der Erfindung noch vorgesehen, daß jeder Seitenschenkel dieses U-förmig abgewinkelten Gleitbleches zwischen einem Befestigungsflansch einer Quertraverse und dem zugeordneten Längsholm eingeklemmt ist. Eine Einklemmung ist die einfachste Art der Befestigung und für die am Gleitblech auftretende Belastung auch völlig ausreichend. Besondere Bohrungen im Gleitblech können damit vermieden werden.

Es ist besonders vorteilhaft, wenn die Stirnseiten der Seitenschenkel des U-förmig abgewinkelten Gleitbleches auf den Befestigungsbolzen für die Befestigungsflansche aufliegen. Bei richtiger Bemessung der Höhe dieser Seitenschenkel kann damit bei der Montage auch eine Justierung dieses Gleitbleches vermieden werden. Es wird einfach auf die genannten Bolzen aufgelegt und anschließend, wie bereits beschrieben, geklemmt. Insbesondere in diesem Fall ist es vorteilhaft, wenn die innere Seitenwand der Gurtwand eines jeden Längsholms um etwa die Dicke der Seitenschenkel zurückliegt. Im unteren Bereich liegt dann der Befestigungsflansch der Quertraverse am Längsholm und im oberen Bereich am abgewinkelten Schenkel des Gleitbleches an, das sich seinerseits an der etwas zurückliegenden inneren Seitenwand der Gurtwand abstützt.

Hierdurch kann wieder eine vollständige Auflage des Befestigungsflansches jeder Quertraverse erreicht werden.

Die Erfindung soll nun anhand verschiedener Ausführungsbeispiele, die in den Zeichnungen dargestellt sind, näher erläutert werden.

Es zeigen:

| | |
|---|---|
| Figur 1 | Rahmen für Bandfördervorrichtung in Perspektive, ohne Standfüße |
| Figur 2 | Ansicht ähnlich Figur 1, jedoch ohne Kopfstücke |
| Figur 3 | Ansicht ähnlich Figur 1 oder 2, jedoch mit geändertem Längsholmprofil |
| Figur 4 | Ansicht in Richtung des Pfeils I nach Figur 2 |
| Figur 5 | Ausschnitt ähnlich wie Figur 4, jedoch mit vom Gleitblech abgedecktem Längsholm |
| Figur 6 | Ansicht ähnlich Figur 4, jedoch mit aufliegenden Schenkeln des U-förmig abgewinkelten Gleich- blechs |
| Figur 7 | Querschnittsprofil wie Figur 6, jedoch mit rückversetzter Seitenwand der oberen Gurtwand des Längsholms |
| Figur 8 | Endstück eines Längsholms in Perspektive mit ausgezogenem Spaltblech |
| Figur 9a bis d | verschiedene Prinzipanordnungen der Förderbandführungen und des Förderbandantriebs in Seitenansicht mit eingezeichneten Gleitblechen |
| Figur 10 | einsteckbares Kopfstück in Perspektive mit Endstück eines Längsholms |

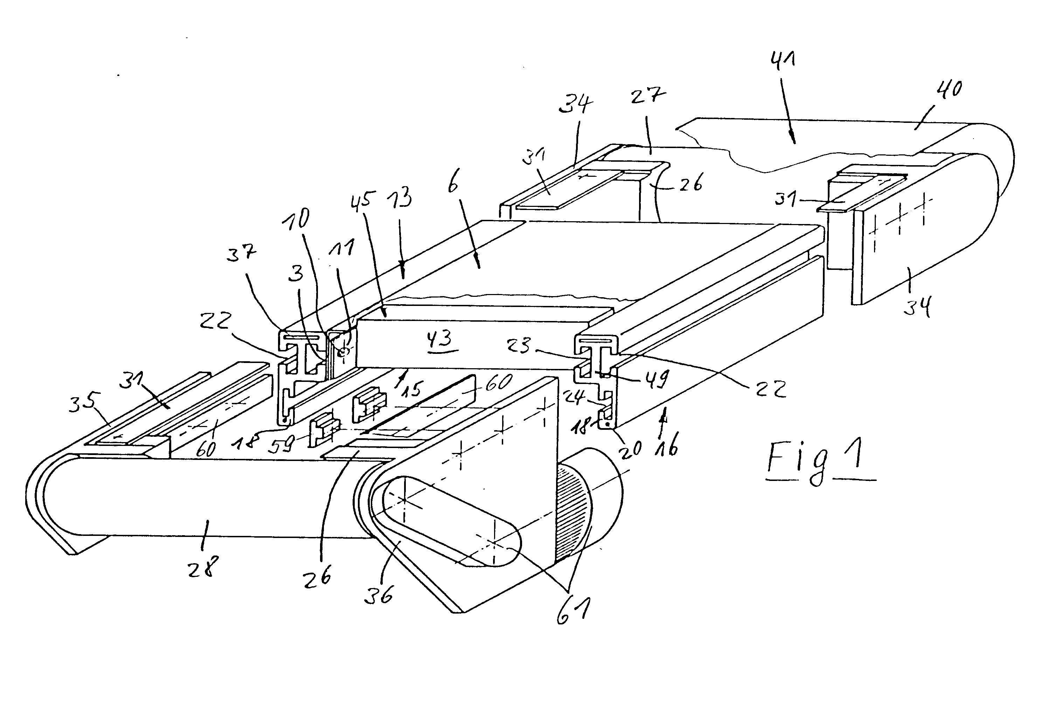

In Figur 1 sind alle wesentlichen Bauelemente mit Ausnahme der Standbeine eines Rahmens für eine Bandfördervorrichtung zu erkennen. Zwei Längsholme 16 sind parallel zueinander angeordnet und werden über mindestens eine, bei Bedarf auch über mehrere, Quertraversen 15 auf Abstand zueinaner gehalten und starr miteinander verbunden. Die Anzahl der Quertraversen hängt von der Länge der Bandfördervorrichtung ab.

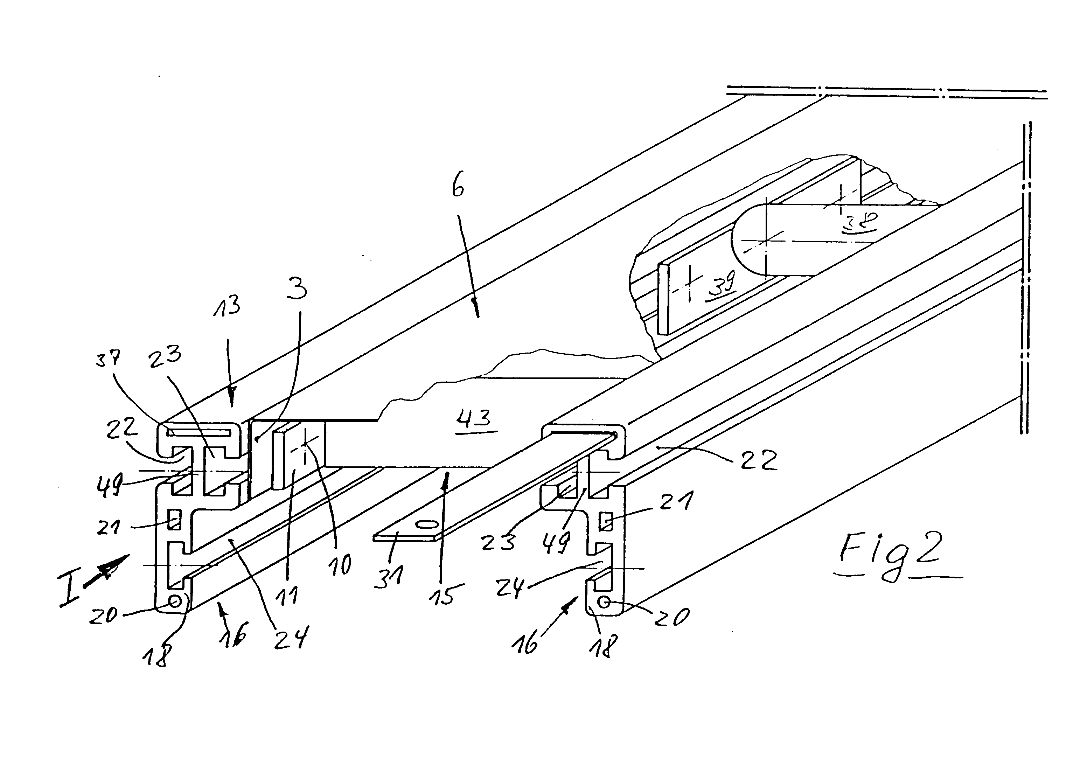

Die Längsholme 16 weisen jeweils in sich gegenüberliegender Anordnung je eine äußere T-Nut 22 und eine innere T-Nut 23 auf, die durch einen Mittelsteg 49 voneinander getrennt sind. Die T-Nuten 22 und 23 sind in gleicher Höhe einander gegenüberliegend angeordnet. Die obere Abdekkung wird von einer Gurtwand 13 gebildet, die genügend dick ist, um eine in Längsrichtung durchgehende rechteckige Ausnehmung 37 zu umfassen. Im unteren Bereich weist jeder Längsholm 16 einen in Längsrichtung verlaufenden Flansch 18 auf, der wie ein äußerer Steg angeordnet ist. Dieser Flansch 18 weist eine ebenfalls in Längsrichtung sich erstreckende und in Richtung zum gegenüberliegenden Flansch 18 hin offene Längsnut in Form einer T-Nut 24 auf. Im Flansch 18 können außerdem in Längsrichtung durchgehende Öffnungen 20 und 21 (Figur 2) vorhanden sein.

Im Bereich der sichtbaren Stirnwände der Längsholme 16 nach Figur 1, sind die Lagerschilde 35 und 36 vorgesehen zur Lagerung und zum Antrieb einer Antriebswalze 28. Der unmittelbare Bereich um die Antriebswalze herum ist durch eine Walzenspaltabdeckung 26 gesichert. Die Walzenanordnung, der Walzenantrieb und die Walzenspaltabdeckung sind an sich bekannt, so daß hierauf nicht näher eingegangen werden muß. Die Lagerschilde 35 und 36 können nun seitlich außen über die Längsholme geführt werden und in üblicher Weise über T-Nuten-Steine 59 in einer beliebigen Position festgeklemmt werden. Zur Führung kann bei Bedarf auch z.B. eine Zunge 60 in die innere T-Nut 23 eingeführt werden. Falls erwünscht, kann auch diese Zunge 60 natürlich geklemmt werden.

Im oberen Bereich der Walzenspaltabdeckung 26 ist noch leicht lösbar ein Spaltblech 31 angeordnet, das in die rechteckige Ausnehmung eingreift und sich bei einer Längsverschiebung der Lagerschilde 35 und/oder 36 entsprechend mitverschiebt und den durch die Verschiebung entstehenden Spalt abgedeckt hält.

Lagerschild 36 trägt eine in bekannter Weise aufgebaute Antriebseinheit 61. Auch hierauf muß daher nicht näher eingegangen werden.

Am gegenüberliegenden Ende der beiden Längsholme 16 sind zwei gleiche Lagerschilde 34 in spiegelbildlicher Anordnung zueinander vorgesehen, die eine Umlenkwalze 27 tragen und über die bereits beschriebenen und an sich bekannten Walzenspaltabdeckungen 26 verfügen, wobei an diesen Walzenspaltabdeckungen ebenfalls in der soeben bezüglich der Lagerschilde 35 und 36 beschriebenen Weise Spaltbleche 31 angeordnet sind, die in die entsprechende rechteckige Ausnehmung 37 hineinragen. Um die Walze 28 und 27 herum ist in ebenfalls bekannter Weise das Förderband 40 geführt.

Zwischen den Längsholmen 16 ist ein Gleitblech 6 vorgesehen, das U-förmig abgebogen ist und zwei Seitenschenkel 3 aufweist. Diese Seitenschenkel 3 sind gegen die entsprechenden Innenseiten der Längsholme 16 angelegt und weisen durchgehende Bohrungen auf. Weiter nach innen liegen dann Befestigungsflansche 11 der Quertraversen 15 an, die über Befestigungsbolzen 10 über z.B. in der jeweiligen inneren T-Nut 23 geführte T-Nuten-Steine festgeklemmt sind, so daß jeder Seitenschenkel 3 zwischen der inneren Seitenfläche des Längsholmes 16 und einem Befestigungsflansch 11 eingeklemmt ist. Hierzu stimmt natürlich der Abstand der Löcher in den Seitenschenkeln 3 mit den entsprechenden Löchern für die Befestigungsbolzen 10 im Befestigungsflansch 11 überein.

Zwischen den Befestigungsflanschen 11 ist eine Stütztraverse 43 angeordnet, die das Gleitblech 6 von unten abstützt.

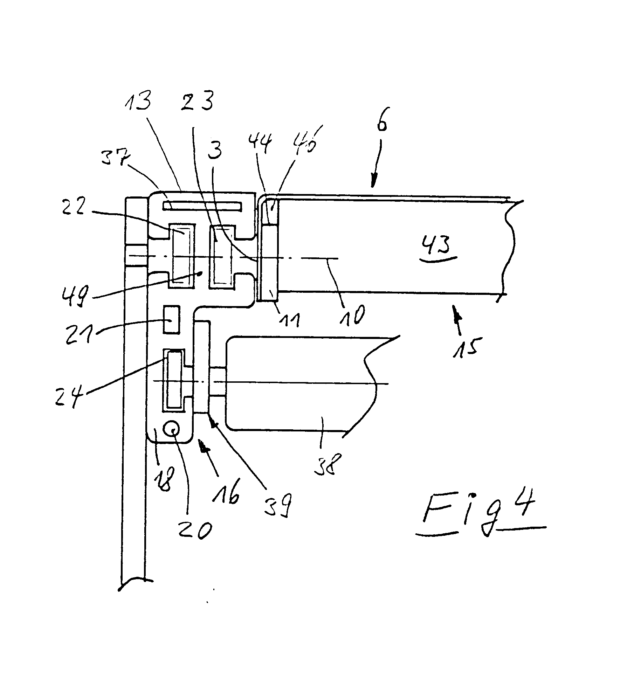

Die beschriebene Anordnung ist etwas deutlicher zu erkennen in Figur 2, in der die Rahmenteile deutlicher dargestellt sind, wobei die Lagerschilde weggelassen wurden. Eine weitere Verdeutlichung ergibt sich aus Figur 4, die eine Ansicht in Richtung des Pfeils I nach Figur 2 zeigt. Es ist hierbei deutlich zu erkennen, daß die Stütztraverse 43 etwas nach oben über den oberen Rand des Befestigungsflansches 11 hinausragt, so daß zwischen der Oberkante 44 des Befestigungsflansches 11 und der Oberkante 45 der Stütztraverse 43 ein Abstand besteht. Infolge der Dicke des Befestigungsflansches 11 entsteht eine Verformungslücke 46, die als Toleranzausgleich dient. Es kann dann das Abstandsmaß der beiden Schenkel 3 voneinander etwas kleiner als das Sollmaß gehalten werden, wobei dann dieses kleinere Maß mit einer Toleranz bis zum eigentlichen Sollmaß sowie auch um den entsprechenden Betrag schmaler eingehalten werden muß. Wird dann das Gleitblech 6 in der beschriebenen Weise eingeklemmt und von den Befestigungsflanschen 11 während der Einklemmung auseinandergezogen, so kann der Seitenschenkel 3 im Bereich der Verformungslücke 46 etwas einknicken und hierdurch den erforderlichen Längenausgleich wieder herstellen. Die notwendigen Löcher für die Befestigungsbolzen 10 sind in den Seitenschenkeln 3 so angeordnet, daß nach Durchführung der Befestigungsbolzen 10 und nach Einklemmung des Gleitblechs 6 dessen Oberseite in einer Ebene mit der Oberseite der Gurtwand 13 liegt und damit eine Gleitebene für das Förderband 40 bildet, wobei das Förderband 40 vorzugsweise so breit ist, daß es noch auf der Oberfläche der Gurtwand 13 gleitet.

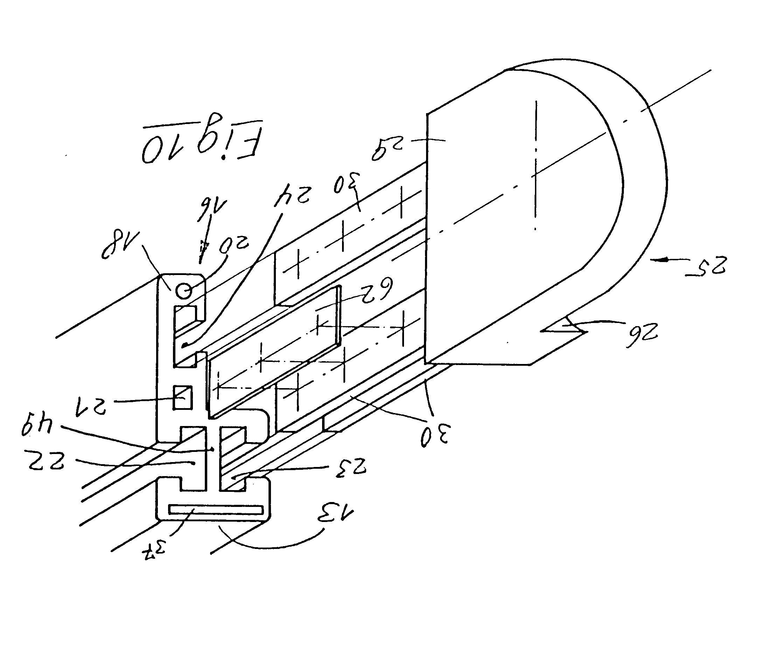

In Figur 2 ist in dem gezeichneten Ausschnitt im Gleitblech 6 eine Andrückwalze 38 mit ihrer Walzenhalterung 39 erkennbar. Eine entsprechende Anordnung ist auch in Figur 4 gezeigt. Zur Halterung sind weitere nicht näher bezeichnete T-Nuten-Steine in dieim Flansch 18 vorgesehene T-Nut 24 eingesetzt, die mit der Walzenhalterung 39 über eine bei der Verwendung von T-Nuten-Steinen übliche Schraubverbindung zur Befestigung der Walzenhalterung 39 zusammenarbeiten. Die Walzenhalterung 39 trägt hierbei die Walze 38 drehbar. Die Position der Walze 38 in Längsrichtung kann hierbei beliebig sein. Die Walze 38 ist in den im Flansch 18 vorgesehenen T-Nuten 24 in jede beliebige Längsposition schiebbar und dort festklemmbar. Mögliche Positionen solcher Andrückwalzen sind in den Figuren 9a und 9c schematisch dargestellt.

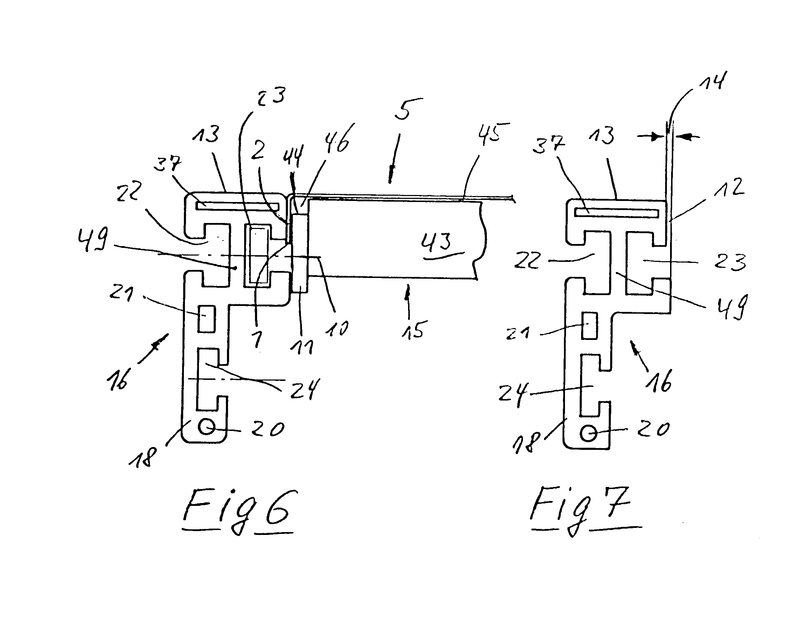

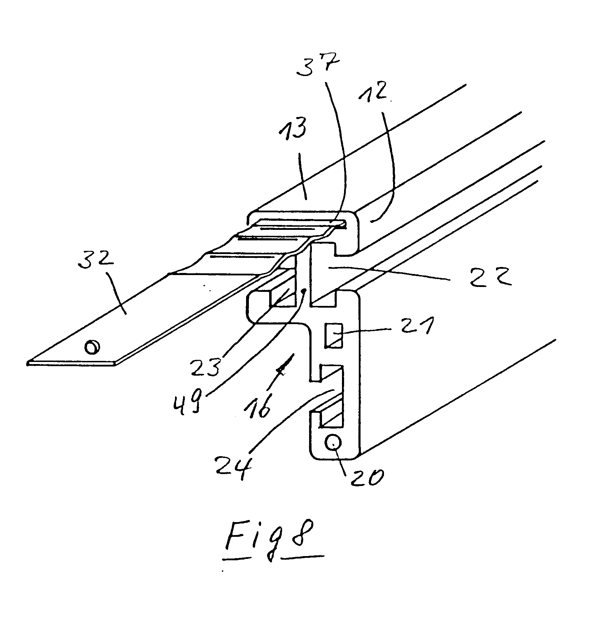

Die Figuren 6 und 7 zeigen eine ganz ähnliche Anordnung wie die Figur 4. Das dort verwendete Gleitblech 5 weist jedoch zwei kürzere Seitenschenkel 2 auf, die mit ihrer Stirnseite 1 einfach auf den Befestigungsbolzen 10, die jeweils nur durch eine Mittellinie angedeutet sind, aufliegen. Hierdurch können die Bohrungen in den Seitenschenkeln vermieden werden. Um hierbei die Dicke des Seitenschenkels 2 auszugleichen, springt die innere Seitenwand 12 des Längsholms 16 im oberen Bereich bis zur inneren T-Nut 23 um etwa die Dicke 14 des jeweiligen Seiten schenkels 2 zurück. Es handelt sich hierbei um eine ganz besonders günstige Maßnahme, die auch den Aufbau bereits bekannter Rahmen wirtschaftlicher macht.

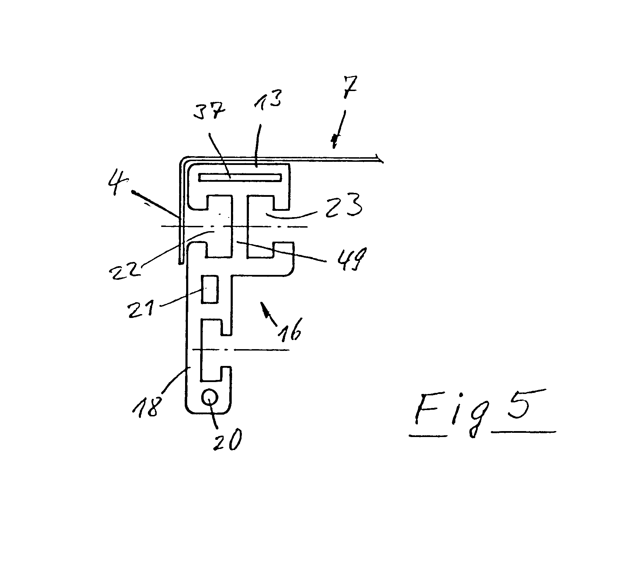

Es ist aber nicht nur möglich ein U-förmig gebogenes Gleitblech an den Innenseiten zu befestigen. Figur 5 zeigt eine Darstellung des Längsholmes 16 ähnlich wie Figur 6. Es ist jedoch hier ein Gleitblech 7 vorgesehen mit U-förmig abgewinkelten Seitenschenkeln 4, die die Längsholme außen umfassen. Somit ist jeder Längsholm vollständig von dem Gleitblech 7 überdeckt und umfaßt. Über entsprechende T-Nuten-Steine in den äußeren T-Nuten 22 und der üblichen Verschraubung und Lochung, kann das Gleitblech 7 befestigt werden. Es kann jedoch durch von außen anzubauende Teile auch einfach geklemmt werden.

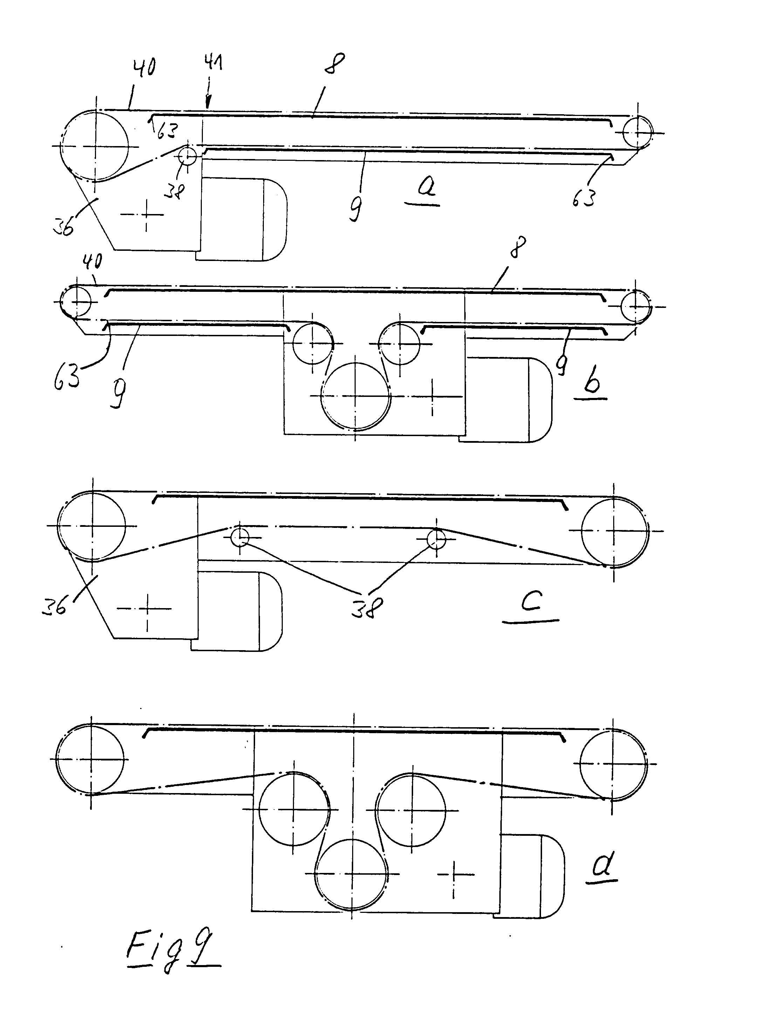

Die Figur 8 zeigt das stirnseite Ende eines Längsholmes 16 in Perspektive. Dort ist zu erkennen, daß anstelle des glatten Spaltbleches 31, wie in Figur 1 beschrieben, nunmehr ein mindestens teilweise gewelltes Spaltblech 32 verwendet wird. Hierdurch kann die rechteckige Ausnehmung 37 in der Höhe vollständig ausgefüllt und ein Klappern des Spaltbleches verhindert werden.

Figur 10 zeigt das stirnseitige Ende eines Längsholmes 16 in einer Perspektive ganz ähnlich wie Figur 8. Es ist jedoch weiter in Perspektive und explosionsartiger Darstellung ein Lagerschild 25 für eine Umlenkwalze, z.B. für die Walze 27, dargestellt das steckbar ausgeführt ist. Zunächst weist hierzu ein Kopfstück 29 noch eine bereits bekannte Walzenspaltabdeckung 26 auf. An dem dem stirnseitigen Ende des Längsholms 16 zugewandten Bereich weist jedoch das Kopfstück 29 verschiedene Steckfüße 30 auf, die in die innere und äußere T-Nute 22, 23 und in den am Flansch 18 vorgesehene T-Nut 24 eingesteckt werden können. Eine außen angebrachte Klemmplatte 62 kann dann jeweils für eine Feststellung in beliebiger Position sorgen.

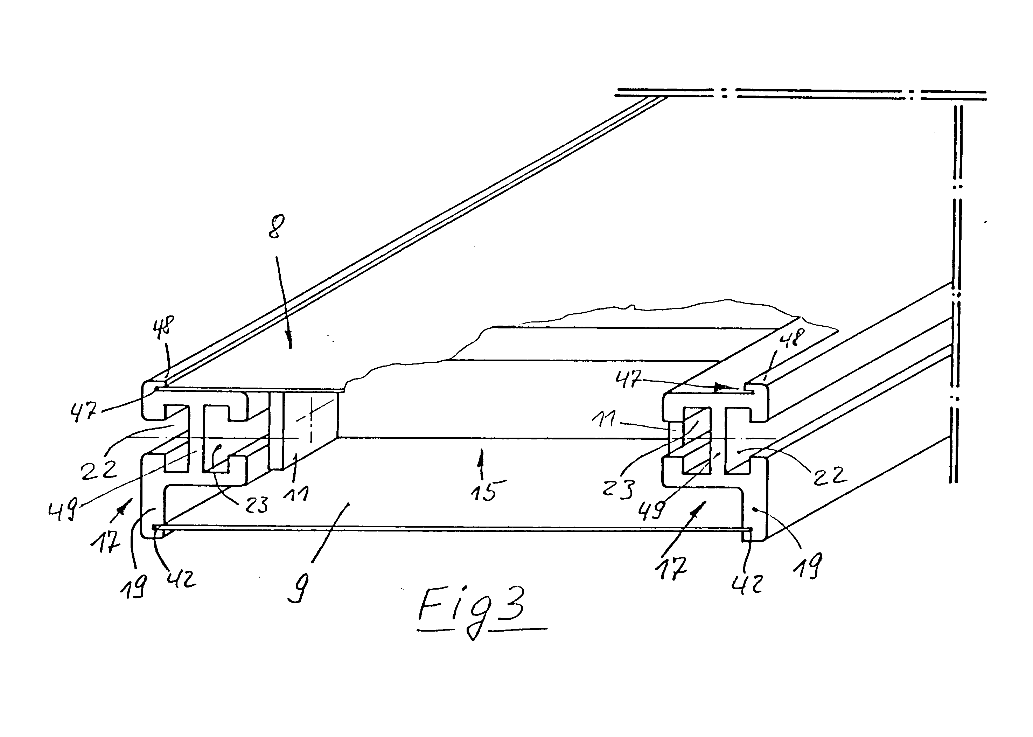

Die Figur 3 zeigt eine ähnliche Ansicht wie Figur 2. Es ist jedoch der Querschnitt der verwendeten Längsholme etwas variiert. Die in Figur 3 verwendeten Längsholme 17 weisen ebenfalls die in Längsrichtung verlaufenden und in sich gegenüberliegender Anordnung vorgesehenen inneren und äußeren T-Nuten 22 und 23 auf, die jeweils durch einen Mittelsteg 49 voneinander getrennt sind. Sich unten anschließend, weist jeder Längsholm 17 einen in Längsrichtung verlaufenden Flansch 19 auf, wobei jeder Flansch 19 eine schlitzartig ausgebildete und ebenfalls in Längsrichtung verlaufende untere Nut 42 aufweist. Auch auf der Oberseite des Längsholms 17 ist eine solche schlitzartige obere Nut 47 vorhanden, die jeweils in Richtung auf den gegenüberliegenden Längsholm hin offen ist. Der Außensteg 48, der den jeweiligen oberen Schlitz 47 nach außen begrenzt, ist dünner als die Dicke des zu verwendenden Förderbandes, damit das Förderband immer höher ist und auch auf dem Förderband liegende Werkstücke, die geringfügig den Rand des Förderbandes überschreiten, nicht an diesem Steg hängen bleiben. Es kann aber auch dieser Steg 48 sehr dick ausgeführt sein und damit als seitliche Begrenzung für das Fördergut dienen.

Die schlitzartigen Nuten 42 bzw. 47 sind jeweils zur Aufnahme eines Gleitbleches 8 bzw. 9 vorgesehen. Diese Gleitbleche 8 und 9 können als einfache flache Bleche ausgebildet sein und in die obere bzw. untere Nut einfach eingeschoben werden, wie dies in Figur 3 erkennbar ist. Auf diese Art und Weise kann das verwendete Gleitblech sehr einfach gestaltet sein und hergestellt werden. Es handelt sich um ein einfaches flaches Blech. Das untere Gleitblech 9 kann einerseits als Abdeckung der gesamten Einrichtung nach unten dienen, andererseits aber auch als Gleitblech für das rücklaufende Förderband. Die Anordnung der Quertraverse 15 ist so wie bereits zu den Figuren 1 und 2 beschrieben. Allerdings kann bei dieser Ausführung der Quertraverse 15, wenn dies gewünscht ist, die Verformungslücke 46 wegfallen. Toleranzschwierigkeiten treten hier nicht auf, weil die Toleranzen in den schlitzartigen Nuten 42 und 47 ausgeglichen werden. Hierzu müssen die genannten schlitzartigen Nuten lediglich von ausreichender Tiefe sein. Um Axial verschiebungen der Gleitbleche 8 oder 9 zu verhindern, können diese an ihren Enden mit einfachen Abwinklungen 63 oder entsprechenden Eindellungen versehen sein (siehe Figur 9). Auch bei einer Ausführungsform der Längsholme 13 nach Figur 3 kann ein steckbares Lagerschild ähnlich dem Lagerschild 25 nach Figur 10 verwendet werden. Es entfällt lediglich dann der untere Steckfuß 30. Es ist aber auch möglich, daß der Flansch 19 bei den Längsholmen 17 (Figur 3) vergrößert wird und zusätzlich zur schlitzartigen unteren Nut 42 eine T-Nut 24, wie der Längsholm 16, aufweist. Oder es ist umgekehrt möglich, im Längsholm 16 eine schlitzartige untere Nut 42 zusätzlich vorzusehen. Eine solche Kombination ist sehr leicht möglich, weil die schlitzartige untere Nut 42 nur sehr wenig Platz beansprucht. Sowohl dann, wenn der Rahmen Längsholme 16, als auch dann, wenn der Rahmen Längsholme 17 verwendet, ist der Anbau eines Mittelantriebes, wie in den Figuren 9b und 9d schematisch dargestellt, möglich.

Vorzugsweise wird bei einer Ausführungsform nach Figur 3, wie auch bei jeder anderen Ausführungsform, mit einem unten angeordneten Gleitblech 9 die Anordnung dieses Gleitbleches 9 so gewählt, daß die dem Transportgut zugewandte Oberfläche 41 des Förderbandes 40 nach der Umlenkung an der Umlenkwalze oder der Antriebswalze auf dem Gleitblech 9 gleitet. Falls der Durchmesser der Antriebswalze dies nicht ohneweiteres zuläßt, kann vorzugsweise eine Andrückwalze 38 vor dem Gleitblech 9 angeordnet werden zur entsprechenden Umlenkung des Förderbandes 40, wie dies in Figur 9a dargestellt ist. Hierdurch wird gleichzeitig der Umschlingungswinkel des Förderbandes ander Antriebswalze vergrößert, was für die Übertragung der Antriebskraft sehr günstig ist, da die Größe des Umschlingungswinkels als Exponent die auf das Förderband 40 übertragbare Kraft bestimmt.

Die beschriebenen Längsholme lassen sich leicht als Halbzeuge herstellen und können daher durch einfaches Ablängen für beliebige Rahmenlängen verwendet werden. Die notwendigen Halbzeuge sind kostengünstig lagerbar. Die besondere Querschnitts profilierung der genannten Längsholme, erlaubt einen raschen, problemlosen Anbau aller notwendigen Teile zur Ergänzung des Rahmens und zur Erstellung eines vollständigen Förderbandes und erlaubt darüber hinaus in Längsrichtung die stufenlose Positionierung der anzubauenden Teile. Gleichzeitig wird es möglich, die zu verwendenden Teile, wie z.B. die notwendigen Gleitbleche, besonders kosten günstig zu gestalten, weil nach oben stehende scharfe Ränder, die eine besondere Nachbearbeitung erfordern, vermieden werden können und weil aufgrund der Konstruktion der Längsholme für die Abmessungen der Gleitbleche relativ grobe Toleranzen zugelassen werden können. Die Montage ist besonders einfach, weil irgendwelche Ausrichtungen der Gleitbleche entfallen. Darüber hinaus erlauben die verwendeten Profile für die Längsholme auch einen Anbau von bereits vorhandenen Lagerschilden, so daß u.U. bei Modernisierungsarbeiten vorhandene Lagerschilde und Antriebseinheiten übernommen werden können. Soweit Ständer, Füße, Traversen oder ähnliche Bauteile anmomtiert werden müssen, ist deren Position nicht mehr an ein bestimmtes Lochraster gebunden, sondern es kann von diesen Bauteilen jede beliebige Position eingenommen werden, so daß auch eine optimale Anpassung an äußere Raumbedingungen erfolgen kann. Alle Teile bleiben leicht zugänglich und schnell auswechselbar. Eine Nacharbeit des auf Länge abgelängten Halbzeugs (Längs holme) ist nicht erforderlich. Durch die Ablängung allein ist ein Längsholm einsatzfertig.

## Liste der verwendeten Bezugszeichen

| | |
|---|---|
| 1 | Stirnseite |
| 2 | Seitenschenkel |
| 3 | Seitenschenkel |
| 4 | Seitenschenkel |
| 5 | Gleitblech |
| 6 | Gleitblech |
| 8 | Gleitblech |
| 9 | Gleitblech |
| 10 | Befestigungsbolzen |
| 11 | Befestigungsflansch |
| 12 | innere Seitenwand |
| 13 | Gurtwand |
| 14 | Dicke |
| 15 | Quertraverse |
| 16 | Längsholm |
| 17 | Längsholm |
| 18 | Flansch |
| 19 | Flansch |
| 20 | Öffnung |
| 21 | Öffnung |
| 22 | T-Nut |
| 23 | T-Nut |
| 24 | T-Nut |
| 25 | Lagerschild |
| 26 | Walzenspaltabdeckung |
| 27 | Walze |
| 28 | Walze |
| 29 | Kopfstück |
| 30 | Steckfüße |
| 31 | Spaltblech |
| 32 | Spaltblech (gewellt) |
| 33 | Wellung |
| 34 | Lagerschild |
| 35 | Lagerschild |
| 36 | Lagerschild |
| 37 | rechteckige Ausnehmung |
| 38 | Andrückwalze |
| 39 | Walzenhalterung |
| 40 | Förderband |
| 41 | Oberfläche |
| 42 | Nut |
| 43 | Stütztraverse |
| 44 | Oberkante |
| 45 | Oberkante Stütztraverse |
| 46 | Verformungslücke |
| 47 | schlitzartige Nut |
| 48 | Außensteg |
| 49 | Mittelsteg |
| 50 | unbenutzt |
| 50' | unbenutzt |
| 51 | unbenutzt |
| 51' | unbenutzt |
| 52 | unbenutzt |
| 53 | unbenutzt |
| 54 | unbenutzt |
| 55 | unbenutzt |
| 56 | unbenutzt |
| 57 | unbenutzt |
| 58 | unbenutzt |
| 59 | T-Nuten-Stein |
| 60 | Zunge |
| 61 | Antriebseinheit |
| 62 | Klemmplatte |
| 63 | Abwinklung |
| 64 | unbenutzt |
| 65 | unbenutzt |
| 66 | Begrenzungssteg |

## Patentansprüche

1. Rahmen für Bandfördervorrichtungen mit im Abstand gegenüberliegenden, zueinander parallel verlaufenden, T-Nuten aufweisenden Längsholmen, mit mindestens einer von einem Zwischenstück gebildeten Gleitebene und mit Lagerschilden für eine Umlenk- und eine Antriebswalze für das Förderband, wobei die Längsholme (16;17) je über die ganze Länge im Querschnitt zwei sich in gleicher Höhe gegenüberliegend angeordnete T-Nuten aufweisen, dadurch gekennzeichnet, daß die T-Nuten einen vertikal zu einem die Gleitebene bildenden Gleitblech (5-8) verlaufenden gemeinsamen, sich mindestens über die gesamte Breite der T-Nut erstreckenden Mittelsteg (49) aufweisen und daß ein U-förmig abgewinkeltes Gleitblech (5,6) zwischen die beiden Längsholme (16) eingeschoben und mittels der Seitenschenkel (2,3) zwischen den Längsholmen (16) mit Hilfe der T-Nuten befestigt ist, so daß die äußere Fläche des Bodenschenkels in einer Ebene mit der äußeren Fläche einer Gurtwand (13) liegt und so als Gleitblech (5,6) dient.

2. Rahmen für Bandfördervorrichtungen mit im Abstand gegenüberliegenden, zueinander parallel verlaufenden, T-Nuten aufweisenden Längsholmen, mit mindestens einer von einem Zwischenstück gebildeten Gleitebene und mit Lagerschilden für eine Umlenk- und eine Antriebswalze für das Förderband, wobei die Längsholme (16;17) je über die ganze Länge im Querschnitt zwei sich in gleicher Höhe gegenüberliegend angeordnete T-Nuten aufweisen, dadurch gekennzeichnet, daß die T-Nuten einen vertikal zu einem die Gleitebene bildenden Gleitblech (5-8) verlaufenden gemeinsamen, sich mindestens über die gesamte Breite der T-Nut erstreckenden Mittelsteg (49) aufweisen und daß ein U-förmig abgewinkeltes Gleitblech (7) auf die Gurtwand (13) der Längsholme (16) aufgelegt und diese überdeckend mit einem abgewinkelten Seitenschenkel (4) je seitlich um den Längsholm herumgelegt und dort mit Hilfe der T-Nuten befestigt ist.

3. Rahmen nach einem der Ansprüche 1 und 2, dadurch gekennzeichen, daß die Längsholme (16;17) auf der Unterseite einen in Längsrichtung verlaufenden Flansch (18;19) aufweisen, mit mindestens einer ebenfalls sich in Längsrichtung erstreckenden unteren Nut (24;42), die zum gegenüberliegenden Längsholm hin offen ist.

4. Rahmen nach Anspruch 3, dadurch gekennzeichnet, daß die untere Nut als T-Nut (24) ausgebildet ist.

5. Rahmen nach Anspruch 3, dadurch gekennzeichnet, daß die untere Nut (42) schlitzartig ausgebildet ist.

6. Rahmen nach Anspruch 3, dadurch gekennzeichnet, daß sowohl eine untere T-Nut (24) als auch eine schlitzartig ausgebildete untere Nut (42) im Flansch (18,19) vorgesehen ist.

7. Rahmen nach mindestens einem der Ansprüche 1 bis 6, dadurch gekennzeichnet, daß oberhalb der sich gegenüberliegenden T-Nuten (22,23) und im seitlich äußeren Bereich jedes Längsholmes (17) eine in Längsrichtung verlaufende, schlitzartig obere Nut (47) vorgesehen ist.

8. Rahmen nach Anspruch 7, dadurch gekennzeichnet, daß die obere Nut nach oben offen ist.

9. Rahmen nach Anspruch 7, dadurch gekennzeichnet, daß die obere Nut (47) in Richtung auf den gegenüberliegenden Längsholm (17) hin offen ist, wobei die untere Begrenzungswand der oberen Nut (47) von der mindestens etwa parallel zum Gleitblech (8) verlaufenden Oberfläche des zugehörigen Längsholmes (17) gebildet wird.

10. Rahmen nach Anspruch 9, dadurch gekennzeichnet, daß ein die obere Nut (47) begrenzender Außensteg (48) eine geringere Dicke aufweist als ein bei der Bandfördervorrichtung zu verwendendes Förderband (40).

11. Rahmen nach einem der Ansprüche 1 bis 10, dadurch gekennzeichnet, daß die Längsholme (16) oberhalb der sich gegenüberliegenden T-Nuten (22,23) eine Gurtwand (13) aufweisen, die über ihre gesamte Länge eine rechteckige Ausnehmung (37) für den Einschub eines Spaltblechs (31,32) aufweist.

12. Rahmen nach mindestens einem der Ansprüche 7 oder 8, dadurch gekennzeichnet, daß ein Gleitblech (8) in die oberhalb der sich gegenüberliegenden T-Nuten (22,23) vorgesehene schlitzartige obere Nut (47) eingeschoben ist.

13. Rahmen nach einem der Ansprüche 1 bis 12, dadurch gekennzeichnet, daß die beiden Längsholme (16;17) über mindestens eine zwischen ihnen angeordnete Quertraverse (15) miteinander verbunden sind, die im wesentlichen aus zwei Befestigungsflanschen (11) und einer dazwischen angeordneten Stütztraverse (43) besteht, zur unterseitigen Abstützung des Gleitbleches (5-8).

14. Rahmen mindestens nach Anspruch 1 und 15, dadurch gekennzeichnet, daß die Befestigungsflansche (11) so tief angesetzt sind, daß zwischen Oberkante (44) des Befestigungsflansches (11) und Oberkante (45) der Stütztraverse (43) ein Abstand besteht, der im Angrenzungsbereich der beiden Bauteile eine Verformungslücke (46) für das Gleitblech (5,6) bildet.

15. Rahmen nach mindestens einem der Ansprüche 1 bis 14, dadurch gekennzeichnet, daß in die in Längsrichtung verlaufende untere Nut (42) des sich ebenfalls in Längsrichtung erstreckenden Flansches (19) ein unteres Gleitblech (9) eingeschoben ist.

16. Rahmen nach Anspruch 15, dadurch gekennzeichnet, daß das Förderband (40) so geführt ist, daß die Oberfläche (41), die dem Fördergut zugewendet wird, am unteren Gleitblech (9) zur Anlage kommt.

**17.** Rahmen nach einem der Ansprüche 1 bis 14, dadurch gekennzeichnet, daß in der in Längsrichtung verlaufenden T-Nut (24) des sich ebenfalls in Längsrichtung erstreckenden Flansches (16) mindestens eine Andrückwalze (38) mit Hilfe einer Walzenhalterung (39) eingeschoben und befestigt ist.

**18.** Rahmen nach einem der Ansprüche 1 bis 17, dadurch gekennzeichnet, daß jedes längsverstellbare Lagerschild (25, 34-36) ein Spaltblech (31,32) aufweist in einer solchen Anordnung, daß es in die rechteckige Ausnehmung (37) der Gurtwand (13) eingeschoben und mit einer Bewegung der Lagerschilde mit bewegt wird.

**19.** Rahmen nach Anspruch 18, dadurch gekennzeichnet, daß das Spaltblech (32) mindestens über einen Teil seiner Länge gewellt (33) ist.

**20.** Rahmen nach einem der Ansprüche 1 bis 19, dadurch gekennzeichnet, daß mindestens die Lagerschilde (25) für eine Walze (27) im wesentlichen aus einem Kopfstück (29) mit an sich bekannter Walzenspaltabdeckung (26) und sich anschließender Steckfüße (30) zum Einschub in die T-Nuten (22,23,24) des zugeordneten Längsholmes (16) bestehen.

**21.** Rahmen nach einem der Ansprüche 1 bis 20, dadurch gekennzeichnet, daß in dem sich in Längsrichtung erstreckenden Flansch (18) mindestens eine in Längsrichtung durchgehend verlaufende Öffnung (20,21) vorgesehen ist.

**22.** Rahmen mindestens nach Anspruch 1, dadurch gekennzeichnet, daß jeder Seitenschenkel (2) des U-förmig abgewinkelten Gleitblechs (5,6) zwischen einem Befestigungsflansch (11) einer Quertraverse (15) und dem zugeordneten Längsholm (16) eingeklemmt ist.

**23.** Rahmen nach Anspruch 22, dadurch gekennzeichnet, daß die Stirnseiten (1) der Seitenschenkel (2) auf den Befestigungsbolzen (10) für die Befestigungsflansche (11) aufliegen.

**24.** Rahmen nach Anspruch 23, dadurch gekennzeichnet, daß die innere Seitenwand (12) der Gurtwand (13) um etwa die Dicke (14) der Seitenschenkel (2) zurückliegt.

## Claims

**1.** Frame for belt conveying devices having longitudinal spars provided with annular grooves spaced opposite and running parallel to each other, having at least one sliding plane formed by an intermediate piece and having bearing plates for an idle roller and a drive roller for the conveying belt, the longitudinal spars (16, 17) being provided with two annular grooves each disposed opposite each other at the same height over the entire length in the cross section, characterised in that the annular grooves have a common centre cross piece (49) which extends at least across the entire width of the annular groove and which runs vertically to a sliding sheet (5 - 8) forming the sliding plane, and that a U-shaped angled sliding sheet (5, 6) is inserted between the two longitudinal spars (16) and is attached by means of the lateral arms (2, 3) between the longitudinal spars (16) with the aid of the annular grooves, so that the external surface of the bottom arm lies in a plane with the external surface of a belt wall (13) and thus acts as a sliding sheet (5, 6).

**2.** Frame for belt conveying devices having longitudinal spars provided with annular grooves spaced opposite and running parallel to each other, having at least one sliding plane formed by an intermediate piece and having bearing plates for an idle roller and a drive roller for the conveying belt, the longitudinal spars (16, 17) provided with two annular grooves each disposed opposite each other at the same height over the entire length in the cross section, characterised in that the annular grooves have a common centre cross piece (49) which extends at least over the entire width of the annular groove and runs vertically to the sliding sheet (5 - 8) forming the sliding plane and that a U-shaped angled sliding sheet (7) is laid on the belt wall (13) of the longitudinal spar (16) and this is laid around the longitudinal spars overlapping laterally with an angled lateral arm (4) respectively and is attached there with the aid of annular grooves.

**3.** Frame according to one of claims 1 and 2 characterised in that the longitudinal spars (16, 17) have on the lower side a flange (18, 19) running in the longitudinal direction, having at least one lower groove (24, 42) which also extends in the longitudinal direction and which is open towards the longitudinal spar lying opposite.

**4.** Frame according to claim 3, characterised in that the lower groove is designed as an annular groove (24).

5. Frame according to claim 3, characterised in that the lower groove (42) is designed in the shape of a slit.

6. Frame according to claim 3, characterised in that both a lower annular groove (24) and a slit-shaped lower groove (42) are provided in flange (18, 19).

7. Frame according to at least one of claims 1 to 6, characterised in that a slit-shaped upper groove (47) running in the longitudinal direction is provided above the annular groove (22, 23) lying opposite each other and in the lateral outer region of each longitudinal spar (17).

8. Frame according to claim 7, characterised in that the upper groove is open in an upwards direction.

9. Frame according to claim 7, characterised in that the upper groove (47) is open in the direction of the longitudinal spar (17) lying opposite, and the lower boundary wall of the upper groove (47) is formed by the surface of the associated longitudinal spar (17), this surface running at least approximately parallel to the sliding sheet (8).

10. Frame according to claim 9, characterised in that the thickness of an outer cross piece 48 which forms the boundary of the upper groove (47) is slightly less than that of a conveying belt (40) which is to be used with the belt conveying device.

11. Frame according to one of claims 1 to 10, characterised in that the longitudinal spar (16) has a belt wall (13) above the annular grooves (22, 23) lying opposite each other, the belt wall (13) is provided, over its entire length, with a right angled recess (37) for inserting a slotted sheet (31, 32).

12. Frame according to at least one of claims 7 to 8, characterised in that a sliding sheet (8) is inserted into the slit shaped upper groove (47) which is provided above the annular grooves (22, 23) lying opposite each other.

13. Frame according to one of claims 1 to 12, characterised in that the two longitudinal spars (16, 17) are connected to each other by way of at least one cross bar (15) disposed between them, the cross bar (15) comprising substantially two attachment flanges (11) and a supporting cross bar (43) disposed between them, for the purpose of supporting the sliding sheet (5 - 8) on the lower side.

14. Frame at least according to claims 1 to 15, characterised in that the attachment flanges (11) are attached low in such a way that there is a space between the upper edge (44) of attachment flange (11) and the lower edge (45) of the supporting cross bar (43), forming in the region bordering the two components a shaping hole (46) for the sliding sheet (5, 6).

15. Frame according to at least one of claims 1 to 14, characterised in that a lower sliding sheet (9) is inserted into the lower groove (42) of the flange (19), the lower groove (42) running in the longitudinal direction and the flange (19) also extending in the longitudinal direction.

16. Frame according to claim 15, characterised in that the conveying belt (40) is guided in such a way that the surface (41), which faces the goods to be conveyed, comes to rest on the lower sliding sheet (9).

17. Frame according to one of claims 1 to 14, characterised in that at least one pressure roller (38) is inserted and attached, with the aid of a roller mounting (39), into the annular groove (24) of the flange (16), the annular groove (24) running in the longitudinal direction and flange (16) also extending in the longitudinal direction.

18. Frame according to one of claims 1 to 17, characterised in that each longitudinally adjustable bearing plate (25, 34 - 36) has a slotted sheet (31, 32) in such an arrangement, that it is inserted into the right angled recess (37) of the belt wall (13) and moves simultaneously with a movement of the bearing plate.

19. Frame according to claim 18, characterised in that the slotted sheet (32) is corrugated (33) at least over one part of its length.

20. Frame according to one of claims 1 to 19, characterised in that at least the bearing plates (25) for a roller (27) comprise substantially a head piece (29) having a roller slit cover (26) known per se and adjoining plug-in feet (32) for insertion into the annular grooves (22, 23, 24) of the associated longitudinal spar (16).

21. Frame according to one of claims 1 to 20, characterised in that at least one aperture (20, 21) running continuously in the longitudinal direction is provided in the flange (18) extending in the longitudinal direction.

22. Frame at least according to claim 1, characterised in that each lateral arm (2) of the U-shaped angled sliding sheet (5, 6) is clamped between an attachment flange (11) of a cross bar (15) and the associated longitudinal spar (16).

23. Frame according to claim 22, characterised in that the front sides (1) of the lateral arm (2) rest on the attachment bolts (10) for the attachment flange (11).

24. Frame according to claim 23, characterised in that the internal lateral wall (12) of the belt wall (13) is set back by approximately the thickness (13) of the lateral arm (2).

**Revendications**

1. Bâti pour dispositifs à bande transporteuse, comportant des éléments longitudinaux disposés face à face, de façon espacée, parallèles l'un à l'autre et pourvus de rainures en T, au moins un plan de glissement défini par une pièce intermédiaire, et des flasques pour un rouleau de déviation et pour un rouleau d'entraînement prévus pour la bande transporteuse, les éléments longitudinaux (16 ; 17) possédant chacun, sur toute leur longueur, en coupe transversale, deux rainures en T disposées face à face à la même hauteur, caractérisé en ce que les rainures en T possèdent une branche centrale commune (49) s'étendant verticalement par rapport à une tôle de glissement (5-8) définissant le plan de glissement, et s'étendant au moins sur toute la largeur de la rainure en T, et en ce qu'une tôle de glissement (5, 6) coudée en U est insérée entre les deux éléments longitudinaux (16) et fixée, grâce aux branches latérales (2, 3), entre les éléments longitudinaux (16) à l'aide des rainures en T, de sorte que la surface extérieure de la branche de base se trouve dans le même plan que la surface extérieure d'une paroi pour courroie (13) et serve ainsi de tôle de glissement (5, 6).

2. Bâti pour dispositifs à bande transporteuse, comportant des éléments longitudinaux disposés face à face, de façon espacée, parallèles l'un à l'autre et pourvus de rainures en T, au moins un plan de glissement défini par une pièce intermédiaire, et des flasques pour un rouleau de déviation et pour un rouleau d'entraînement prévus pour la bande transporteuse, les éléments longitudinaux (16 ; 17) possédant chacun, sur toute leur longueur, en coupe transversale, deur rainures en T disposées face à face à la même hauteur, caractérisé en ce que les rainures en T possèdent une branche centrale commune (49) s'étendant verticalement par rapport à une tôle de glissement (5-8) définissant le plan de glissement et s'étendant au moins sur toute la largeur de la rainure en T, et en ce qu'une tôle de glissement (7) coudée en U est posée sur la paroi pour courroie (13) des éléments longitudinaux (16) et est placée, en couvrant celle-ci, latéralement autour de chacun des éléments longitudinaux, avec une branche latérale coudée (4), et fixée à l'aide des rainures en T.

3. Bâti selon l'une des revendications 1 et 2, caractérisé en ce que les éléments longitudinaux (16 ; 17) possèdent, sur leur face inférieure, une aile (18 ; 19) s'étendant dans le sens longitudinal et comportant au moins une rainure inférieure (24 ; 42) s'étendant également dans le sens longitudinal et qui est ouverte en direction de l'élément longitudinal opposé.

4. Bâti selon la revendication 3, caractérisé en ce que la rainure inférieure est conçue comme une rainure en T (24).

5. Bâti selon la revendication 3, caractérisé en ce que la rainure inférieure (42) est conçue en forme de fente.

6. Bâti selon la revendication 3, caractérisé en ce qu'il est prévu, dans l'aile (18, 19), non seulement une rainure en T inférieure (24), mais également une rainure inférieure (42) conçue comme une fente.

7. Bâti selon l'une au moins des revendications 1 à 6, caractérisé en ce qu'il est prévu, au-dessus des rainures en T (22, 23) se faisant face et dans la zone extérieure latérale de chaque élément longitudinal (17), une rainure supérieure (47) en forme de fente s'étendant dans le sens longitudinal.

8. Bâti selon la revendication 7, caractérisé en ce que la rainure supérieure est ouverte vers le haut.

9. Bâti selon la revendication 7, caractérisé en ce que la rainure supérieure (47) est ouverte en direction de l'élément longitudinal opposé (17), la paroi de délimitation inférieure de la rainure supérieure (47) étant définie par la surface, s'étendant au moins approximativement parallèlement à la tôle de glissement (8), de l'élément longitudinal associé (17).

10. Bâti selon la revendication 9, caractérisé en ce qu'une branche extérieure (48) délimitant la rainure supérieure (47) présente une épaisseur inférieure à celle d'une bande transporteuse (40) à utiliser avec le dispositif à bande transporteuse.

11. Bâti selon l'une des revendications 1 à 10, caractérisé en ce que les éléments longitudinaux (16) possèdent, au-dessus des rainures en T (22, 23) se faisant face, une paroi pour courroie (13) qui est pourvue, sur toute sa longueur, d'un creux rectangulaire (37) pour l'insertion d'une tôle de fente (31, 32).

12. Bâti selon l'une au moins des revendications 7 ou 8, caractérisé en ce qu'une tôle de glissement (8) est insérée dans la rainure supérieure (47) en forme de fente prévue au-dessus des rainures en T (22, 23) se faisant face.

13. Bâti selon l'une des revendications 1 à 12, caractérisé en ce que les deux éléments longitudinaux (16 ; 17) sont reliés entre eux par au moins une traverse (15) disposée entre eux et qui se compose essentiellement de deux flasques de fixation (11) et d'une traverse de support (43) disposée entre ceux-ci pour supporter la face inférieure de la tôle de glissement (5-8).

14. Bâti selon l'une au moins des revendications 1 et 15, caractérisé en ce que les flasques de fixation (11) sont appliqués bas de telle sorte qu'il se forme entre le bord supérieur (44) du flasque de fixation (11) et le bord supérieur (45) de la traverse de support (43) un espace qui définit dans la zone voisine des deux éléments de construction un interstice de déformation (46) pour la tôle de glissement (5, 6).

15. Bâti selon l'une au moins des revendications 1 à 14, caractérisé en ce qu'une tôle de glissement inférieure (9) est insérée dans la rainure inférieure (42), s'étendant dans le sens longitudinal, de l'aile (19) s'étendant également dans le sens longitudinal.

16. Bâti selon la revendication 15, caractérisé en ce que la bande transporteuse (40) est guidée de telle sorte que la surface supérieure (41) qui est tournée vers le produit à transporter vient s'appliquer contre la tôle de glissement inférieure (9).

17. Bâti selon l'une des revendications 1 à 14, caractérisé en ce qu'au moins un rouleau presseur (38) est inséré et fixé à l'aide d'une fixation de rouleau (39) dans la rainure en T (24), s'étendant dans le sens longitudinal, de l'aile (16) s'étendant également dans le sens longitudinal.

18. Bâti selon l'une au moins des revendications 1 à 17, caractérisé en ce que chaque flasque (25, 34-36) réglable longitudinalement possède une tôle de fente (31, 32) qui est disposée de telle sorte qu'elle est insérée dans le creux rectangulaire (37) de la paroi pour courroie (13) et entraînée par un mouvement des flasques.

19. Bâti selon la revendication 18, caractérisé en ce que la tôle de fente (32) est ondulée (33) au moins sur une partie de sa longueur.

20. Bâti selon l'une des revendications 1 à 19, caractérisé en ce qu'au moins les flasques (25) prévus pour un rouleau (27) se composent essentiellement d'une pièce de tête (29) pourvue d'un recouvrement de fente de rouleau (26) connu en soi et de tenons (30), dans son prolongement, pour l'insertion dans les rainures en T (22, 23, 24) de l'élément longitudinal (16) associé.

21. Bâti selon l'une des revendications 1 à 20, caractérisé en ce qu'il est prévu, dans l'aile (18) s'étendant longitudinalement, au moins une ouverture (20, 21) s'étendant de façon continue dans le sens longitudinal.

22. Bâti au moins selon la revendication 1, caractérisé en ce que chaque branche latérale (2) de la tôle de glissement (5, 6) coudée en U est serrée entre un flasque de fixation (11) d'une traverse (15) et l'élément longitudinal (16) associé.

23. Bâti selon la revendication 22, caractérisé en ce que les faces frontales (1) des branches latérales (2) reposent sur les boulons de fixation (10) prévus pour les flasques de fixation (11).

24. Bâti selon la revendication 23, caractérisé en ce que la paroi latérale intérieure (12) de la paroi pour courroie (13) est en retrait d'une distance correspondant approximativement à l'épaisseur (14) des branches latérales (2).

Fig 1

Fig 2

Fig 3

Fig 4

Fig 5

Fig 6

Fig 7

_Fig8_

EP 0 329 832 B1

Fig 9

Fig. 10